## Europäisches Patentamt
## European Patent Office
## Office européen des brevets

(11) Publication number: **0 000 209**
**B1**

(12) # EUROPEAN PATENT SPECIFICATION

(45) Date of publication of patent specification: **10.02.82**

(51) Int. Cl.³: **G 02 B 5/30**.

(21) Application number: **78200002.0**

(22) Date of filing: **01.06.78**

(54) **Visible-range light polarizer with an iodine-stained polyvinyl alcohol film, and method for its preparation.**

(30) Priority: **29.06.77 US 810996**

(43) Date of publication of application:
**10.01.79 Bulletin 79/1**

(45) Publication of the grant of the European patent:
**10.02.82 Bulletin 82/6**

(84) Designated Contracting States:
**BE DE FR GB NL**

(56) References cited:
**CH - A - 216 195**
**DE - B - 1 258 084**
**US - A - 2 328 219**
**US - A - 2 375 963**
**US - E - 23 297**

(73) Proprietor: **POLAROID CORPORATION**
**549 Technology Square**
**Cambridge, Massachusetts 02139 (US)**

(72) Inventor: **Schuler, Norman William**
**49 Dexter Road**
**Lexington, Massachusetts (US)**

(74) Representative: **Lawrence, Peter Robin Broughton et al,**
**Gill, Jennings & Every 53-64 Chancery Lane**
**London WC2A 1HN (GB)**

Courier Press, Leamington Spa, England.

# Visible-range light polarizer with an iodine-stained polyvinyl alcohol film, and method for its preparation

Linear light polarizers in general owe to the anisotropic character of their transmitting medium their properties of selectively passing radiation vibrating along a given electromagnetic radiation vector and absorbing electromagnetic radiation vibrating along a second given electromagnetic radiation vector. Dichroic polarizers are linear polarizers of the absorptive variety since they owe their polarizing capabilities to the vectorial anisotropy of their absorption of incident lightwaves. Light entering a dichroic medium encounters two different absorption coefficients, one low and one high. The emerging light vibrates predominantly in the direction of low absorption.

Polyvinyl alcohol film polarizers generally comprise a plastic support, which may be any suitable isotropic material and is preferably cellulose acetate butyrate. The support gives the film dimensional stability and additionally serves as a cover or protective element. It must naturally be transparent.

The most widely used type of synthetic polarizers is the polyvinyl alcohol-iodine complex polarizers. It consists of linear polyiodide contained within a polyvinyl alcohol helix. By orienting the polyvinyl alcohol matrix unidirectionally the transition moments of the absorbers are also so oriented and the material becomes visibly dichroic.

The manufacture of iodine stained dichroic light polarizing elements involves stretching polyvinyl alcohol and subsequently dyeing the material with a dichroic stain containing iodine and is well known. It is disclosed for example, in U.S. Patent No. 2,237,567. In such a method a cast sheet or film of polyvinyl alcohol is first formed from an aqueous solution of the material. The dried cast sheet is then heated to a temperature at which it can be extruded by stretching, preferably in a moist atmosphere. The stretched sheet may be bonded to a supporting sheet, as has been discussed above. After the stretched sheet is cooled, a dichroic stain may be applied to one or both surfaces of the sheet.

In U.S. Patent No. 2,375,963, an improvement is described comprising washing the polarizer after the step involving staining with iodine. This results in removing uncombined iodine and forming a more stable product.

In U.S. Reissue Patent No. 23,297 a major improvement is described comprising forming a protective surface layer on the iodine stained polyvinyl alcohol light polarizer. This surface layer comprises an ester of polyvinyl alcohol, the ester being a polybasic acid or a derivative of such an acid, particularly an inorganic polybasic acid, and more particularly boric acid, thereby providing a hybrid form of polyvinyl alcohol-polyvinyl borate. The protective layer is preferably formed by treating the stained polarizing element with a borating solution containing free boric acid or a derivative that will react to form the ester. The ester formed on the surface of the light polarizer is believed to be polyvinyl orthoborate. The treatment is said to improve greatly the stability of the light polarizer not only against heat but also against moisture and ultraviolet radiation. The esterification reaction may be accompanied by some decrease in the degree of molecular orientation and loss of stain in the reacted layer. This in turn may cause a loss in the dichroism of the sheet and a deterioration in transmission running as high as from 5 to 10 percent of incident light. The predominant colour of the sheet also changes toward the blue. Thus the sheet becomes less efficient in its overall blue adsorption.

The diminution in the blue dichroic absorption, or darkening, of a borated polarizer can be prevented by eliminating the iodine from so much of the surface layer of the sheet as will be penetrated by the boric acid solution. One way of eliminating this iodine is to wash the sheet with water after staining and before treatment with the borating solution. However this is not entirely satisfactory and so the purpose behind the invention is to minimise this darkening in a satisfactory manner and without introducing any fresh disadvantages.

We have discovered that a superior technique for avoiding the loss of blue absorption involves incorporating a high level of potassium iodide in the borating solution. Apparently inclusion of a sufficient amount of potassium iodide reinforces the dichromophore responsible for absorption in the blue range. After the material has been borated and dried, excellent blue dichromophore stability and a high level of blue absorption is maintained. However, a significant instability which results in a drop-off in red light adsorption results, especially on heating, thereby producing a significant "red leak" which is particularly noticeable when two such polarizers are in the crossed position. The "red leak" is quite noticeable, partiularly in polarizers with low light leakage at the lower end of the spectrum, i.e., the blue end. We have found that this "red leak" problem can be avoided or minimised by absorbing zinc ions into the surface layer after staining.

A light polarizing element according to the invention comprises a uniaxially stretched film of polyvinyl alcohol stained with iodine and which has a surface layer comprising a polyvinyl borate and is characterised in that the stained surface layer also comprises potassium iodide in an amount sufficient to prevent substantially loss of blue absorption and zinc ions have been absorbed into the surface layer after staining.

A method according to the invention of preparing a light polarizing element comprises staining with an iodine solution a uniaxially stretched film of polyvinyl alcohol and treating the stained film with an aqueous borating solution and is characterised in that the borating solution includes potassium iodide in an amount sufficient to prevent substantially loss of blue absorption and zinc ions are incorporated into the polarizing element after the staining.

It is essential that the zinc ions be introduced after the element has been stained with the odine and preferably they are introduced at the same time as the surface treatment of the element to form the polyvinyl borate. Thus preferably the zinc ions are included in the borating solution.

The zinc ions may be provided by an ionisable zinc compound, for instance, zinc salts such as zinc chloride, zinc iodide and zinc sulphate. Most preferably they are provided by incorporating zinc chloride into the borating solution.

The borate component of the borating solution may be provided by conventional manner as described above, for example by use of a solution of boric acid.

The amount of zinc ion incorporated into the polarizing element must naturally be such as to give the desired reduction or elimination of red leak and the optimum amount can be found by simple experiment. Suitable amounts can be defined as being of the concentration effective to stabilise absorption of red light by the polarizer against degradation on heating.

It has been found that in addition to providing heat and moisture stability, the borating solution prevents the iodine stain from being removed from the sheet during processing. If the iodine stained material is treated merely with a solution containing potassium iodide and zinc chloride and no boric acid, much of the active iodine is removed.

The dichroic complex formed by polyvinyl alcohol and iodine occurs in a family of varying chain lengths, for example, triiodide, pentaiodide, etc. Since the spectral position of the absorption peaks depends upon the dichromophore chain lengths it can be seen that there will be an optimum relative concentration of short and long chain units resulting in the highest efficiency for the various segments of the visible region.

The presence of zinc ion in the polarizer is thought to retard degradation on heating of the dichromophore responsible for red absorption. This dichroic red degradation is apparently increased by the potassium iodide acting in conjunction with the dichromophore responsible for blue absorption. The zinc ion apparently stabilises the red absorption of iodine-stained polarizers and inhibits degradation on heating of the dichromophore responsible for such absorption.

We are aware that zinc chloride has been employed in a redox system in an earlier stage of the manufacture of iodine stained light polarizing elements, this having been described in U.S. Patent No. 2,328,219. In this, a cellophane sheet is immersed in a solution comprising potassium iodide and zinc chloride prior to contacting the sheet with iodine stain. Thus in this method a sheet different from the stretched polyvinyl alcohol of the invention is contacted with zinc chloride before the material is stained and not after, as is required by the present invention. We described below the inferior results obtained when zinc chloride is incorporated before staining instead of after.

In preferred methods of making the light polarizing element of the present invention a polyvinyl alcohol sheet from 0.038 to 0.051 mm in thickness is stretched unidirectionally by techniques well known to the art to between 3.5 and 4 times its normal dimensions. The stretched polyvinyl alcohol sheet is laminated to one side of a layer of cellulose acetate butyrate which is between 0.127 and 0.343 mm in thickness. The cellulose acetate butyrate sheet may have on its surface opposed to its surface laminated to the stretched polyvinyl alcohol a mar resistant coating as is disclosed, for example, in U.S. Patent No. 3,097,106. The cellulose acetate butyrate may be laminated to the polyvinyl alcohol sheet by any suitable method known to the art and in particular may be laminated by means of any suitable adhesive; but preferably one comprising a solution of polyvinyl alcohol. In addition the cellulose acetate butyrate material may contain isotropic dyes which provides cosmetic properties such as tinting.

The exposed side of the stretched polyvinyl alcohol is next passed over the surface of an iodine staining bath and essentially floats along the surface. The bath is preferably a mixture of iodine, potassium iodide and water, which is preferably of the composition described below. Excess iodine stain is wiped off and the sheet is then floated on a borating composition bath containing potassium iodide, boric acid, zinc chloride and water, preferably of the composition described below. It is next wiped dry, baked, and may then be laminated to another sheet of cellulose acetate butyrate to provide total protection on both sides of the polarizer.

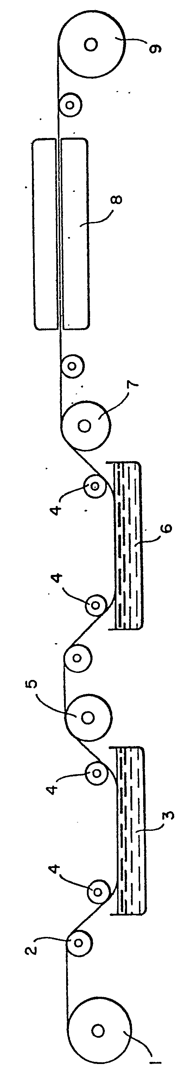

The invention is now described with reference to the accompanying drawing, which is a schematic illustration of the process of the present invention.

Example 1

A film of polyvinyl alcohol approximately 0.038 mm in thickness is uniaxially stretched to 3.6 times its orginal dimension. The stretched sheet is then laminated to a sheet of cellulose acetate butyrate upon which is coated a film of polyethyleneglycol dimethylacrylate by the general method described in U.S. Patent No. 3,097,106. The cellulose acetate butyrate is laminated to the polarizer by means of a suitable adhesive, e.g. an adhesive comprising polyvinyl alcohol, methanol, a crosslinking agent and water and is preferably 0.381 mm in thickness.

Referring now to the unique figure, a roll of this laminate, stretched polyvinyl alcohol-cellulose acetate butyrate material 1 is conducted over a suitable roll 2 and drawn across the surface of an iodine stain bath 3. The polyvinyl alcohol layer is in contact with the surface of the bath and the cellulose acetate butyrate layer is the upper layer and generally held out of contact with the surface of the bath. Rolls 4 are mere guide rolls and do not effect the floating of the layer across the surface of the bath. The temperature of the bath is held at 35°C and the residence time of any given point of the web across the surface of the bath is about 15 seconds. As the web leaves the bath, it is drawn across wiper 5 which may be no more than a damp towel and is then directed to bath 6 where, in a manner similar to its treatment in bath 3, it is drawn across the surface of a borating composition. The temperature of the borating bath is about 74°C and the residence time of any given point of the web in the bath is 25 to 30 seconds. After leaving this bath, the web contacts a second wiping station 7 which is preferably a porous roll with toweling on the outside and vacuum applied inside the roll. To keep the roll damp a gentle water spray is applied to its outside surface. After being toweled dry the web is directed through oven 8 where it is exposed to air currents of about 94°C to dry the web. It is then rerolled at station 9.

Samples of light polarizing material made essentially as described above but with different formulations of the two baths were exposed to 75°C dry heat for a period of 15 hours in order to determine the heat stability of the polarizers, the details of the formulations being given in Examples 2 to 6.

In each instance the exposed samples were analysed on a Cary 14 spectophotometer to determine the optical density of the light polarizing element as a function of wavelength.

### Example 2

This film was exposed to a first bath containing iodine and potassium iodide and a second bath in which both the potassium iodide and zinc chloride were omitted. The first bath accordingly comprised iodine, potassium iodide, and water in a weight ratio of 1/15.82/328 and the second bath comprised boric acid and water in a weight ratio of 1/20.54.

### Example 3

This film was manufactured with a first bath which also comprised iodine, potassium iodide and water in a weight ratio of 1/15.82/328; but the second bath comprised boric acid, zinc chloride and water in a weight ratio of 1.25/1/25.67.

### Example 4

This film was prepared with a first bath which also contained iodine, potassium iodide and water in a weight ratio of 1/15.82/328; but the second bath contained boric acid, potassium iodide and water in a weight ratio of 1/1.56/20.54.

### Example 5

This film was prepared with a first bath which also contained iodine, potassium iodide and water in a weight ratio of 1/15.82/328; but the second bath contained boric acid, potassium iodide, zinc chloride and water in a weight ratio of 1.25/1.95/1/25.67.

This is an example of the invention.

### Example 6

This was exposed to a first bath comprising iodine, potassium iodide, zinc chloride and water in a weight ratio of 1/15.82/12/328; and a second bath which contained boric acid, potassium iodide and water in a weight ratio of 1/1.56/20.54. This is an example of a process in which zinc is applied before staining, instead of after as in the invention.

Curves of optical density versus wavelength have been drawn. For Example 2 the curves before and after heating show significant blue leakage in the crossed position. this is also true of the curves of Example 3 except that the zinc chloride has significantly raised the optical density of the polarizer in the red region which is in fact the effect that the present invention is intended to achieve.

In the curves of Example 4 the presence of potassium iodide has substantially eliminated blue leakage in both the before and after-heated polarizers. However, red absorbance is lower than was noted in Example 3.

The curves in Example 5 demonstrate that by including zinc chloride along with potassium iodide in the borating solution the "blue leak" is substantially reduced and the red response or reduction of the "red leak" is maximised. At 750 nm the optical density of the polarizer of Example 5 is over 1.5 while the optical density of the polarizer of Example 4 at 750 nm is under 1.

The curves of Example 6 clearly show that it does make a difference when the zinc ion is added. It is not enough that zinc ion is applied at some stage in the manufacture of an iodine stained polarizer, but is must be applied subsequent to the iodine staining step. The curves of Example 4 and 6 appear similar. After the heat stability treatment they are in fact nearly identical. What can be concluded from this is that the zinc ion, when present in the stain, did not have much of an effect on the optical response of the polarizer. If anything, it lowered the blue absorbence.

By the present invention a highly efficient light polarising element has been prepared which finds utility not only in conventional situations but in some unconventional situations, where as close to absolute extinction as is possible is required in the crossed position as in, for example, flash blindness goggles, such as might be employed by welders and others exposed to sudden bursts of extremely bright visible radiation which is potentially harmful to the eyes.

## Claims

1. A method of preparing a light polarizing element comprising staining with an iodine solution a uniaxially stretched film of polyvinyl alcohol and treating the stained film with an aqueous borating solution characterised in that the borating solution includes potassium iodide, in an amount sufficient substantially to prevent loss of blue absorption and zinc ions are incorporated into the polarizing element after staining.

2. A method according to claim 1 characterised in that the zinc ions are incorporated into the polarizing element after the staining by including zinc ions in the borating solution.

3. A method according to claim 2 characterised in that the zinc ions are provided by dissolving zinc chloride in the borating solution.

4. A method according to any preceding claim characterised in that the borating solution comprises boric acid.

5. A light polarizing element comprising a uniaxially stretched film of polyvinyl alcohol stained with iodine and which has a stained surface layer comprising a polyvinyl borate characterised in that the stained surface layer also comprises potassium iodide in an amount sufficient to prevent substantially loss of blue absorption and zinc ions have been absorbed into the surface layer after staining.

## Revendications

1. Procédé de préparation d'un élément polarisant la lumière comprenant la coloration avec une solution d'iode d'une pellicule d'alcool polyvinylique étirée uniaxialement et le traitement de la pellicule colorée avec une solution aqueuse boratante, caractérisé en ce que la solution boratante est composée d'iodure de potassium, en quantitié suffisante pour empêcher de manière substantielle la perte d'absorption de bleu, et que des ions zinc sont incorporés dans l'élément polarisant après la coloration.

2. Procédé selon la revendication 1, caractérisé en ce que les ions zinc sont incorporés dans l'élément polarisant après la coloration en introduisant des ions zinc dans la solution boratante.

3. Procédé selon la revendication 2, caractérisé en ce que les ions zinc sont fournis en dissolvant du chlorure de zinc dans la solution boratante.

4. Procédé selon l'une quelconque des revendications précédentes, caractérisé en ce que la solution boratante comprend de l'acide borique.

5. Elément polarisant la lumière comprenant une pellicule d'alcool polyvinylique étirée uniaxialement colorée par l'iode et qui a une couche superficielle colorée renfermant un borate polyvinylique, caractérisé en ce que la couche superficielle colorée comprend aussi de l'iodure de potassium en une quantité suffisante pour empêcher de manière substantielle la perte d'absorption de bleu, et que des ions zinc ont été introduits par absorption dans la couche superficielle après coloration.

## Patentansprüche

1. Verfahren zur Hestellung eines Lichtpolarisationselements, wobei ein in einer Achse gestreckter Polyvinylalkoholfilm mit einer Jodlösung angefärbt und der angefärbte Film mit einer wäßrigen Boratisierlösung behandelt wird, dadurch gekennzeichnet, daß die Boratisierlösung Kaliumjodid in einer zur weitgehenden Verhinderung des Verlustes an Blauabsorption ausreichenden Menge enthält und daß nach dem Anfärben Zinkionen in das Polarisationselement eingebaut werden.

2. Verfahren nach Anspruch 1, dadurch gekennzeichnet, daß die Zinkionen nach dem Anfärben dadurch in das Polarisationselement eingebaut werden, daß der Boratisierlösung Zinkionen zugesetzt werden.

3. Verfahren nach Anspruch 2, dadurch gekennzeichnet, daß die Zinkionen durch Auflösung von Zinkchlorid in der Boratisierlösung zur Verfügung gestellt werden.

4. Verfahren nach einem der vorausgehenden Ansprüche, dadurch gekennzeichnet, daß die Boratisierlösung Borsäure enthält.

5. Lichtpolarisationselement, enthaltend einen in einer Achse gestreckten Polyvinylalkoholfilm, der mit Jod angefärbt ist und der eine angefärbte Oberflächenschicht mit einem Polyvinylborat enthält, dadurch gekennzeichnet, daß die angefärbte Oberflächenschicht zusätzlich Kaliumjodid in einer zur weitgehenden Verhinderung des Verlustes in Blauabsorption ausreichenden Menge enthält, und daß nach dem Anfärben Zinkionen in der Oberflächenschicht absorbiert worden sind.